# FASCICULE DE BREVET EUROPEEN

(11) **EP 2 641 832 B1**
(45) Date de publication et mention de la délivrance du brevet: **06.07.2016**
(21) Numéro de dépôt: 13000983.0
(22) Date de dépôt: 27.02.2013
(51) Int. Cl.: B64C 27/32, B64C 27/48, G01M 5/00, G01B 5/30, B64C 27/00, B64C 27/35, B64C 27/51, F01D 7/00, B64D 45/00

(54) **Dispositif de surveillance du comportement en battement et/ou en traînée d'une pale de rotor d'un giravion**
Vorrichtung zur Überwachung des Verhaltens im Anschlag und/oder im Strömungswiderstand eines Rotorblatts eines Drehflügelflugzeugs
Device for monitoring the flutter and/or drag behaviour of a rotorcraft rotor blade

(30) Priorité: 19.03.2012 FR 1200813
(43) Date de publication de la demande: 25.09.2013
(73) Titulaire: Airbus Helicopters, 13725 Marignane Cedex (FR)
(72) Inventeur: Perrin, Christophe, F-13300 Salon De Provence (FR); Imbert, Nicolas, F-13008 Marseille (FR); Chuc, Charles, F-13012 Marseille (FR)
(74) Mandataire: GPI & Associés

(56) Documents cités:
- DE-A1-102006 037 900
- FR-A1- 2 774 655
- US-A1- 2008 036 617
- US-A1- 2010 101 335

## Description

La présente invention est du domaine des systèmes d'évaluation du comportement d'une pièce mécanique en mouvement, dans un cadre d'application aux rotors équipant les giravions. La présente invention relève plus particulièrement des systèmes de surveillance du comportement en mobilité en battement et/ou en traînée d'une pale d'un tel rotor.

La présente invention a pour objet un rotor de giravion équipé d'un appareil de capture d'informations relatives au comportement en mobilité d'une pale de ce rotor. Ledit appareil de capture est organisé pour permettre la surveillance du comportement en inclinaison de la pale, et plus particulièrement en battement et/ou en traînée, par rapport à un moyeu tournant d'entraînement de la pale en rotation.

Les giravions sont des aéronefs munis d'au moins un rotor d'entraînement en rotation d'une voilure tournante. Le rotor est notamment un rotor principal procurant au moins la sustentation sinon aussi la propulsion du giravion, ou est un rotor de queue procurant un guidage du giravion en lacet. Le rotor est encore susceptible d'être une hélice propulsive, notamment exploitée pour équiper un hélicoptère hybride par exemple.

La voilure tournante comprend des pales qui sont montées par l'intermédiaire d'un pied de pale sur un moyeu du rotor entraîné en rotation par une source motrice. Les pales sont en pluralité et sont radialement réparties autour du moyeu. Les pales sont montées articulées sur le moyeu en étant manoeuvrables en pivotement sur elles-mêmes par un pilote, pour modifier le comportement en vol du giravion. La modification du comportement en vol du giravion est opérée à partir d'une variation du pas des pales au moins collectivement sinon aussi cycliquement. Le pilote est notamment un opérateur et/ou un pilote automatique mis en oeuvre par l'opérateur.

Plus particulièrement, les pales du rotor sont manoeuvrables par le pilote en pivotement sur elles-mêmes autour d'un axe de pivot s'étendant suivant leur direction générale d'extension. Les pales sont aussi mobiles en basculement dans leur plan général, en battement et en traînée. Une telle mobilité en basculement de la pale est notamment provoquée sous l'effet de son entraînement en rotation et des effets aérodynamiques induits sur la pale. Les inclinaisons de la pale en battement et en traînée correspondent à une inclinaison de la pale respectivement transversalement et radialement par rapport à l'axe de rotation du moyeu.

Se pose le problème d'une surveillance du comportement en mobilité de la pale en battement et/ou en traînée par rapport au moyeu. Il est recherché par la présente invention de surveiller le comportement en mobilité de la pale, et de collecter des informations pertinentes au regard des mouvements auxquels elle est soumise, en battement et/ou en traînée notamment. Il est plus particulièrement recherché l'obtention d'une analyse fiable et précise des mouvements auxquels la pale est soumise.

Une telle surveillance est recherchée pour apprécier la durée de vie des pièces mécaniques que comprend le rotor, et pour organiser au mieux les opérations de maintenance du rotor. A partir d'une telle surveillance, les opérations de maintenance sont susceptibles d'être réalisées selon les besoins réels, déterminés au regard des mouvements qui ont été réellement opérés sur les pales en battement et/ou en traînée.

Une telle surveillance est aussi susceptible d'être mise à profit pour accroître la sécurisation des giravions. Par exemple, à partir d'une surveillance du comportement des pales, il est possible d'alerter en temps réel un opérateur, pilote du giravion notamment, d'une éventuelle défaillance ou d'un travail excessif voire inadéquat du rotor.

Une telle surveillance est encore recherchée pour identifier de potentielles améliorations à apporter au rotor, au regard de sa structure et/ou de son fonctionnement, à partir d'un examen des mouvements réellement subis par les pales sur une période et/ou pour des missions de vol données.

Le comportement d'une pale en pivotement permettant de faire varier son pas est aisément connu à partir des commandes de vol opérées par le pilote. Pour apprécier l'ensemble des mouvements auxquels la pale est soumise, se pose le problème particulier de la surveillance du comportement de la pale en inclinaison, plus particulièrement en battement et/ou en traînée. Des solutions spécifiques doivent être mises en oeuvre pour surveiller les mouvements de la pale en battement et/ou en traînée.

Il est connu par le document FR 2.774.655 (EUROCOPTER DEUTSCHLAND), -qui divulgue les caractéristiques du préambule de la revendication 1-un système de surveillance du comportement en battement et/ou en traînée d'un ensemble de montage des pales sur le moyeu d'un rotor. Il est recherché de détecter les états de charge critiques et les risques d'incidents sur le rotor, à partir d'une détection des couples appliqués sur le moyeu par l'ensemble des pales en battement et/ou en traînée.

Le dit ensemble de montage est composé d'une plaque solidaire de pieds de pale porteurs de pales respectives. La plaque forme un organe de jonction conjointe des pieds de pale au moyeu du rotor. L'ensemble de montage est rendu flexible en battement et/ou en traînée à partir de l'agencement structurel des pieds de pale et de la plaque. Le système de surveillance comporte des jauges de contraintes implantées sur l'ensemble de montage, dans la zone de jonction entre les pieds de pale et la plaque. Les jauges de contraintes génèrent des informations issues de déformations subies par l'ensemble de montage dans son plan général et provoquées sous l'effet de mouvements en battement et/ou en traînée des pales.

Le système de surveillance proposé par FR 2.774.655 est de structure simple, mais procure des informations limitées au regard des effets induits sur le rotor du mouvement des pales en battement et/ou en traînée. De telles informations sont notamment suffisantes pour activer des actionneurs modifiant le comportement de l'ensemble de montage en battement. En outre, l'application d'un tel système de surveillance est restreinte au type de rotor mettant en oeuvre un dit ensemble de montage.

Un système de surveillance tel que décrit par FR 2.774.655 mérite d'être amélioré, pour optimiser l'analyse potentielle du mouvement des pales en battement et/ou en traînée, et pour accroître l'exploitation qui peut être faite d'une telle analyse optimisée. Le système de surveillance mérite aussi d'être amélioré pour rendre son application potentielle à un rotor d'un quelconque agencement, notamment au regard des modalités de jonction entre les pales et le moyeu.

On pourra par ailleurs se reporter au document US 2010/101335 (VOLANTHEN M. et al.), qui décrit un système exploitant des capteurs optiques pour mesurer les contraintes subies par les pales d'un rotor de giravion.

On pourra aussi se reporter au document US 2008/036617 (ARMS STEVEN W et al.), qui divulgue un système de surveillance du comportement d'un composant d'un rotor de giravion. Un capteur associé à des moyens de mémoire détecte les efforts supportés par le composant, en vue de remplacer le composant ayant subi des efforts excessifs.

On pourra encore se reporter au document DE 10 2006 037900 (EADS DEUTSCHLAND), qui divulgue un système de surveillance des tensions subies par une pale d'un rotor équipant un giravion, exploitant une jauge de contrainte implantée en bout de pale.

Une autre difficulté à surmonter est liée au caractère tournant de la voilure tournante, qui rend délicat l'utilisation de jauges de contraintes implantées sur la voilure tournante. Le caractère tournant de la voilure tournante ne facilite ni l'acheminement de l'énergie électrique nécessaire au fonctionnement du système de surveillance, ni le transfert d'informations depuis la voilure tournante vers un organe de collecte de ces informations.

Pour illustrer une telle difficulté, il est par exemple mentionné dans le document US2010216398 (SIKORSKY AIRCRAFT CORP.), une exploitation de transducteurs dans un cadre d'application à un rotor de giravion. Il est plus particulièrement proposé une solution pour éviter des interférences de signaux entre l'émetteur et le récepteur, qui sont respectivement implantés sur un rotor et sur une boîte de transmission principale d'un groupe de motorisation équipant le giravion.

Parmi les transducteurs, on connait les transducteurs SAW (d'après l'acronyme anglais Surface Accoustic Waves) à ondes acoustiques de surface. Le fonctionnement des transducteurs SAW est fondé sur le principe de l'effet piézoélectrique inverse. Un transducteur est placé sur une surface piézoélectrique, et est implanté sur une pièce mécanique à surveiller. Le transducteur SAW reçoit depuis une unité d'interrogation une onde électromagnétique, qui est convertie en onde acoustique. Une modification des propriétés physiques de l'onde acoustique est révélatrice d'une modification du comportement de la pièce mécanique sur laquelle est implanté le transducteur. L'onde acoustique modifiée est convertie en onde électromagnétique par le transducteur SAW, et est transmise à l'unité d'interrogation à fréquences données.

Les transducteurs SAW présentent l'avantage d'être passifs, l'énergie nécessaire au fonctionnement du transducteur étant fournie à partir de l'onde électromagnétique transmise par l'unité d'interrogation. Les informations fournies par les transducteurs SAW à l'unité d'interrogation sont performantes, en étant pertinentes et fiables pour des distances de séparation entre le transducteur SAW et l'unité d'interrogation pouvant être de l'ordre de plusieurs mètres. Les transducteurs SAW sont susceptibles d'être exploités comme jauge de contrainte, tel que divulgué par le document US6810750 (INVOCON INC).

Il est encore connu dans le domaine de la surveillance du fonctionnement d'un organe mécanique, des systèmes HUMS (d'après l'acronyme anglais Health and Usage Monitoring Systems). Les systèmes HUMS permettent par exemple de contrôler la température dans un environnement en mouvement, et/ou de surveiller le fonctionnement d'un ensemble mobile par rapport à une structure fixe. Le mouvement de l'ensemble mobile est évalué par un système HUMS, pour détecter un éventuel défaut de sa dynamique. Les systèmes HUMS sont exploités dans le domaine des giravions.

Les systèmes HUMS mettent en oeuvre des transducteurs associant un émetteur d'informations et un récepteur des informations émises. Le récepteur et l'émetteur sont susceptibles d'être respectivement implantés à distance l'un de l'autre sur une structure fixe et sur un ensemble mobile par rapport à la structure fixe. La transmission d'informations entre l'émetteur et le récepteur est réalisée par ondes, pour éviter l'utilisation d'une liaison filaire rendue délicate en raison de la mise en mouvement relative entre la structure fixe et l'ensemble mobile à surveiller.

La précision, la pertinence et la fiabilité des informations fournies par des capteurs d'informations, transducteurs notamment, sont étroitement dépendantes non seulement de leurs capacités propres, mais aussi des modalités relatives à leur implantation sur un organe à surveiller. De telles modalités d'implantation doivent être adaptées pour permettre une exploitation optimisée des performances intrinsèques des capteurs d'informations utilisés.

Pour un rotor de giravion, la performance recherchée des capteurs d'informations ne doit par impliquer pour leur implantation un encombrement conséquent de la zone de jonction entre la pale et le moyeu. L'environnement de ladite zone de jonction doit notamment rester disponible pour l'implantation d'autres organes, tels que des bielles de manoeuvre des pales en pivotement et/ou autres organes fonctionnels équipant couramment les rotors de giravion.

Les modalités de jonction entre le pied de pale et le moyeu sont susceptibles d'être complexes. Par exemple, le pied de pale est potentiellement monté amovible sur le moyeu par l'intermédiaire d'organes de butées, tels que des roulements ou une butée sphérique par exemple. Il est souhaitable que les modalités d'implantation des capteurs d'information soient applicables à un quelconque rotor, et plus particulièrement quelles que soient les modalités de jonction entre le pied de pale et le moyeu.

L'utilisation de transducteurs performants est opportune pour évaluer le comportement d'une pale en battement et/ou en traînée. Se pose le problème spécifique de leur implantation sur le rotor adaptée à cette fonction, notamment au regard des contraintes et difficultés énoncées.

Un compromis doit notamment être trouvé entre des modalités simples, opportunes et pertinentes d'une telle implantation, et une exploitation optimisée des capacités et des performances des transducteurs utilisés. Un tel compromis doit encore prendre en compte une faculté d'implantation du ou des transducteurs sur le rotor, qui soit transposable pour un quelconque rotor sans affecter significativement sa masse et/ou son équilibre, et plus particulièrement qui soit transposable quelles que soient les modalités de jonction prévues entre la pale, le pied de pale et le moyeu.

Le but général de la présente invention est de proposer un rotor de giravion équipé d'un appareil de capture d'informations relatives au comportement en mobilité par inclinaison des pales de ce rotor, en battement et/ou en traînée plus particulièrement.

Le dit appareil de capture est recherché performant au regard de la précision et de la fréquence des informations fournies, et est recherché apte à coopérer avec un récepteur de données distant placé sur une structure fixe du giravion. Les dites performances et précisions sont notamment recherchées pour permettre le traitement pertinent des informations fournies par un système HUMS, pour optimiser leur analyse.

L'appareil de capture est aussi recherché d'une structure simple et légère pouvant être facilement implantée sur un quelconque rotor, en procurant une solution satisfaisante au regard des contraintes, des difficultés à surmonter et du compromis à trouver précédemment visés.

Le rotor de giravion de la présente invention comporte une pluralité de pales montées mobiles sur un moyeu par l'intermédiaire de pieds de pale qui leur sont respectivement affectés. Les pales sont montées mobiles sur le moyeu au moins en pivotement sur elles-mêmes, en étant manoeuvrables par un pilote par l'intermédiaire de bielles pour faire varier leur pas, soit collectivement soit cycliquement. Les pales sont en outre mobiles dans leur plan général suivant des orientations respectivement en battement et en traînée, au moins sous l'effet de leur mise en rotation par le moyeu.

Le rotor est équipé d'un appareil de capture d'informations comprenant au moins une jauge de contrainte génératrice d'informations sous l'effet d'une mise en mobilité d'une pale qui lui est affectée suivant l'une quelconque des orientations en battement et/ou en traînée. La jauge de contrainte est notamment en relation dynamique avec le pied de pale porteur de cette pale, et génère des informations issues du comportement de la pale portée par ce pied de pale suivant une orientation en battement ou en traînée qui lui est affectée.

Selon la présente invention, un tel rotor de giravion est principalement reconnaissable en ce que l'appareil de capture d'informations comprend au moins un ensemble de mesure. L'ensemble de mesure comporte un barreau flexible sur lequel est implantée au moins une jauge de contrainte génératrice d'informations spécifiquement relatives au fléchissement du barreau suivant l'une quelconque au moins des dites orientations en battement et/ou en traînée. Le barreau est interposé en prise à ses extrémités respectives entre le moyeu et un pied de pale qui lui est affecté.

Le barreau est un organe allongé s'étendant entre ses extrémités suivant la direction générale d'extension du pied de pale sur lequel il est installé. Le barreau est fonctionnellement étendu entre ses zones, considérées comme extrémités, qui sont respectivement en prise sur le moyeu et sur le pied de pale.

Le barreau est plus particulièrement fermement maintenu à son extrémité proximale sur le moyeu et prend appui contre le pied de pale à son extrémité distale suivant les deux sens d'une direction correspondante à une orientation de basculement à surveiller. Une mobilité de la pale suivant une orientation de basculement à surveiller induit une déformation en flexion du barreau mesurée par la jauge de contrainte et révélatrice du comportement de la pale suivant cette orientation de basculement à surveiller.

Le barreau est susceptible de prendre appui contre le pied de pale suivant une ou plusieurs orientations de basculement à surveiller. Le maintien ferme du barreau sur le moyeu est notamment réalisé au moins suivant une orientation de basculement à surveiller correspondante à une orientation de fléchissement du barreau. Un tel maintien ferme du barreau est notamment procuré par des moyens d'ancrage du barreau à son extrémité proximale sur le barreau.

Le barreau prend au moins appui à son extrémité distale contre le pied de pale, sinon est susceptible d'être en prise ferme sur le pied de pale. Il est à considérer qu'à partir de l'agencement de l'ensemble de mesure, le dit appui est potentiellement un appui glissant tel que visé plus loin, pour conforter la pertinence des informations obtenues à partir de l'appareil de capture.

Une déformation du barreau en flexion correspond au mouvement de la pale provoquant cette déformation. La jauge de contrainte implantée sur le barreau entre ses extrémités mesure l'amplitude d'un fléchissement du barreau provoqué par un mouvement de la pale suivant l'une quelconque au moins des dites orientations en battement et/ou en traînée. Le barreau est un organe de l'ensemble de mesure dont la fonction est spécifiquement dédiée à l'évaluation du comportement en mobilité de la pale suivant l'une au moins des dites orientations en battement et/ou en traînée.

Chaque ensemble de mesure composant l'appareil est notamment affecté à un pied de pale respectif, la déformation en flexion du barreau d'un ensemble de mesure étant potentiellement distincte de la déformation en flexion d'un barreau d'un autre ensemble de mesure. Il est à considérer que selon l'organisation de l'ensemble de mesure autorisant un fléchissement du barreau suivant l'une et/ou l'autre des orientations en battement et/ou en traînée, l'ensemble de mesure est apte à évaluer un tel fléchissement soit en battement, soit en traînée, soit à la fois en battement et en traînée. L'organisation de l'ensemble de mesure est notamment dépendante d'une variation de section du barreau autorisant sa flexion selon au moins l'une des dites orientations de basculement souhaitées, et/ou d'une variation des modalités de mise en prise du barreau sur le pied de pale.

Le barreau est agencé en organe allongé flexible entre ses extrémités suivant l'une et/ou l'autre des dites orientations de basculement à surveiller. Le barreau est susceptible d'être flexible suivant une orientation de basculement à surveiller et d'être rigide suivant une autre orientation de basculement. La flexibilité du barreau lui est notamment conférée à partir des caractéristiques dimensionnelles de sa section transversale, au moins considérée dans la zone d'implantation de la jauge de contrainte sur le barreau.

Au regard des dimensions d'extension de sa section transversale, l'épaisseur du barreau est notamment affaiblie suivant l'orientation de basculement à surveiller pour lui conférer sa flexibilité, et inversement est susceptible d'être conséquente suivant une autre orientation de mobilité de la pale pour lui conférer sa rigidité. Le barreau est de préférence d'une masse faible, en étant susceptible d'être indifféremment issu d'un matériau métallique ou d'un polymère.

Les notions de proximale et distale sont à considérer au regard de l'extension du barreau entre ses extrémités respectivement orientées vers le moyeu et vers la pale portée par le pied de pale.

La jauge de contrainte est notamment formée d'un transducteur, et potentiellement un transducteur SAW. Le transducteur est implanté sur le barreau de sorte qu'il mesure la déformation du barreau provoquée sous l'effet d'une mise en mobilité de la pale suivant une orientation de basculement correspondante respectivement en battement et/ou en traînée. Une telle déformation du barreau autorisée par sa flexibilité résulte de sa prise ferme sur le moyeu à son extrémité proximale, et de sa prise au moins en appui glissant sur le pied de pale à son extrémité distale. La prise d'appui du barreau sur le pied de pale est une prise d'appuis antagonistes suivant les deux sens opposés de l'orientation de basculement considérée à surveiller de la pale, indifféremment en battement et/ou en traînée.

Le barreau est avantageusement en prise ferme à son extrémité proximale sur le moyeu, et est en appui glissant contre le pied de pale à son extrémité distale.

Le caractère glissant de ladite prise d'appui autorise une mobilité relative entre l'extrémité distale du barreau et le pied de pale suivant une quelconque orientation de basculement différente d'une orientation de basculement considérée à surveiller. Notamment, le barreau est déformé sous l'effet d'une mise en mobilité de la pale suivant une orientation de basculement à surveiller indifféremment en battement et/ou en traînée, tout en restant immobile par rapport au pied de pale lors des mouvements de la pale suivant au moins un quelconque autre mouvement du pied de pale qui n'est pas à surveiller, notamment suivant une orientation de basculement qui n'est pas à surveiller et suivant un pivotement sur lui-même du pied de pale provoqué par une variation du pas de la pale dont le pied de pale est porteur.

Ladite immobilité du barreau résulte de l'appui glissant que prend le barreau à son extrémité distale contre le pied de pale, le dit appui glissant autorisant un mouvement relatif entre le pied de pale et l'extrémité distale du barreau suivant une mobilité différente de l'orientation de basculement à surveiller.

Par exemple, l'orientation de basculement à surveiller correspond à un mouvement du pied de pale en traînée qui provoque une déformation en flexion du barreau en traînée. Une mobilité de la pale en battement est sans effet sur une déformation en flexion du barreau en battement. Par exemple encore et inversement, l'orientation de basculement à surveiller correspond à un mouvement de la pale en battement qui provoque une déformation en flexion du barreau en battement. Une mobilité de la pale en traînée est sans effet sur une déformation en flexion du barreau en traînée.

Il est à considérer que selon une forme particulière de réalisation, le barreau est susceptible d'être en appui contre le pied de pale à la fois en battement et en traînée, à partir de prises d'appui glissant respectives du barreau contre le pied de pale. Seule une mobilité relative entre le barreau et le pied de pale est autorisée suivant la direction générale d'extension du barreau et suivant la mobilité en pivotement du pied de pale sur lui-même.

Il est souhaitable qu'une manoeuvre de la pale en pivotement n'induise pas de contraintes dans le barreau, quelles que soient les modalités de montage en pivotement de la pale sur le moyeu pour faire varier son pas. L'appui glissant pris par le barreau sur le pied de pale indifféremment en battement et/ou en traînée confère avantageusement une liberté de mobilité relative entre l'extrémité distale du barreau et le pied de pale suivant l'orientation en pivotement sur elle-même de la pale dans son plan général.

Plus particulièrement, le barreau prend appui contre le pied de pale suivant l'une au moins des dites orientations de basculement. Une mobilité relative entre le barreau et le pied de pale est ménagée suivant les modalités de mobilité suivantes :
-) la direction générale d'extension du barreau, évitant un montage hyperstatique du barreau sur le pied de pale. Le montage en appui glissant du barreau sur le pied de pale évite une mise en compression du barreau suivant son extension générale sous l'effet de sa déformation en flexion suivant l'une quelconque au moins des dites orientations de basculement.
-) une mobilité en pivotement du pied de pale sur lui-même, un tel pivotement étant notamment provoqué sous l'effet d'une variation du pas de la pale dont le pied de pale est porteur. Le montage en appui glissant du barreau sur le pied de pale évite une mise en torsion du barreau sous l'effet d'une variation du pas de ladite pale induite par son pivotement sur elle-même.

Selon une forme de réalisation, le barreau prend appui contre le pied de pale en battement et une mobilité relative entre le barreau et le pied de pale est ménagée en traînée, notamment en combinaison avec les dispositions de mobilité relative entre le barreau et le pied de pale suivant la direction générale d'extension du barreau et suivant la mobilité en pivotement du pied de pale sur lui-même.

Selon une autre forme de réalisation, le barreau prend appui contre le pied de pale en traînée et une mobilité relative entre le barreau et le pied de pale est ménagée en battement, notamment en combinaison avec les dispositions de mobilité relative entre le barreau et le pied de pale suivant la direction générale d'extension du barreau et suivant la mobilité en pivotement du pied de pale sur lui-même.

Selon encore une autre forme de réalisation, le barreau prend appui contre le pied de pale à la fois en battement et en traînée. Dans ce cas, une mobilité relative entre le barreau et le pied de pale est notamment seulement ménagée suivant la direction d'extension du barreau et suivant la mobilité en pivotement du pied de pale sur lui-même.

Il est à considérer que l'appareil de capture est susceptible de comprendre un ou plusieurs ensembles de mesure implantés sur des pieds de pale respectifs, et respectivement affectés à la surveillance d'une mobilité de pale soit en battement, soit en traînée, soit à la fois en battement et en traînée.

Chacun des dits ensembles de mesure que comprend l'appareil de capture d'informations, comporte plus particulièrement :
-) au moins une dite jauge de contrainte constituée d'un transducteur SAW, permettant une capture d'informations précises à fréquences soutenues relatives à la déformation en flexion du barreau sur lui-même. Une liaison filaire entre le transducteur SAW et un organe de collecte des informations capturées est épargnée. Un tel organe de collecte est notamment une unité d'interrogation du transducteur SAW fournissant en outre l'énergie nécessaire au fonctionnement du transducteur SAW. Une telle unité d'interrogation est apte à être placée à distance du rotor, sur un organe fixe du giravion, et à être mise en relation avec un système HUMS.
-) une structure de montage du transducteur SAW sur le rotor. La structure de montage est un organe indépendant des modalités de montage de la pale sur le moyeu. La structure de montage procure une implantation du transducteur SAW sur le rotor, en interposition entre le moyeu et le pied de pale qui est mobile par rapport au moyeu suivant au moins les dites orientations de basculement. La structure de montage est une interface entre le pied de pale et un ou plusieurs transducteurs SAW, procurant leur mise en relation dynamique suivant au moins une orientation de mobilité de la pale à surveiller. La dite mise en relation dynamique est susceptible d'être une mise en relation en battement, en traînée ou à la fois en battement et en traînée.

La structure de montage comprend le dit barreau flexible porteur du transducteur SAW entre ses extrémités. Le barreau est muni à son extrémité proximale de moyens d'ancrage sur le moyeu, et à son extrémité distale de moyens de prise d'appui préférentiellement glissant du barreau sur le pied de pale, suivant l'une quelconque au moins des orientations respectivement en battement et/ou en traînée, et suivant la direction d'extension du barreau ainsi que suivant la mobilité en pivotement du pied de pale.

L'exploitation d'un barreau est susceptible de permettre une implantation aisée sur ce barreau d'une pluralité de transducteurs SAW distants affectés à la capture d'informations d'une même dite orientation de basculement à surveiller d'une même pale. Cette implantation en pluralité réalisée par l'intermédiaire du barreau procure une précision optimisée de l'appareil de capture, en rendant possible et de manière simple une telle implantation en pluralité sur un même pied de pale. L'exploitation du barreau permet de multiplier les points de mesure suivant une même orientation de basculement à surveiller d'une même pale, et en conséquence de multiplier les sources d'informations pour affiner l'analyse faite à partir de ces informations du comportement des pales en battement et/ou en traînée.

Des transducteurs SAW exploités pour une même orientation de basculement à surveiller sont susceptibles d'être implantés, isolément ou en combinaison, sur une même face du barreau et/ou sur des faces respectives du barreau diamétralement opposées.

Selon une forme avantageuse de réalisation, les moyens de prise d'appui glissant sont du type à portée sphérique entre le barreau et le pied de pale. La prise d'appui glissante du barreau sur le pied de pale est apte à être procurée à partir d'une structure simple.

Par exemple, les moyens de prise d'appui glissant associent, pour une dite orientation de basculement donnée, au moins deux portées sphériques antagonistes du barreau le long de surfaces de guidage respectives opposées que comporte le pied de pale.

L'extrémité distale du barreau est en appuis antagonistes contre le pied de pale respectivement suivant chacun des sens de mobilité d'une orientation de basculement à surveiller. De tels appuis antagonistes sont de préférence matérialisés par au moins deux points d'appui opposés suivant l'un et l'autre des dits sens, sinon à partir d'une pluralité de points d'appui radialement répartis autour de la circonférence définie par les portées sphériques entre elles.

Selon une forme préférée de réalisation, les moyens de prise d'appui glissant associent une sphère ménagée en bout distal du barreau, coopérant avec des patins de guidage de la sphère ménagés sur le pied de pale.

La structure de montage procure une exploitation adaptée d'un ou de plusieurs transducteurs SAW en étant réduite :
a) au barreau muni d'une sphère à son extrémité distale et de moyens d'ancrage à son extrémité proximale.
b) aux patins pouvant être simplement structurés en blocs rapportés par scellement sur le pied de pale. Les patins sont susceptibles de comporter des chemins de guidage de la sphère suivant l'orientation de basculement à surveiller correspondante. Les patins sont avantageusement issus d'un matériau élastomère en étant rapportés sur le pied de pale par scellement.

Selon une forme de réalisation, les moyens d'ancrage sont du type par encastrement, selon lequel l'extrémité proximale du barreau est rigoureusement solidaire du moyeu suivant de quelconques modalités de mobilité. De tels moyens d'encastrement interdisent une quelconque mobilité du barreau par rapport au moyeu, sinon la déformation intrinsèque du barreau par fléchissement.

Les moyens d'ancrage par encastrement sont susceptibles d'être de structure simple, telle que comprenant une platine de fixation du barreau sur le moyeu. Une telle platine de fixation est de préférence conformée en équerre ou conformation analogue en dièdre, pour procurer un renvoi d'angle entre le barreau et un organe du moyeu exploité pour son ancrage.

L'utilisation d'une telle platine permet d'ancrer de manière simple le barreau sur le moyeu en l'orientant suivant la direction d'extension du pied de pale considérée entre le moyeu et la pale dont le pied de pale est porteur.

L'utilisation d'une telle platine permet encore de limiter l'encombrement de la structure de montage en offrant la faculté de l'implanter dans une alvéole que comporte le pied de pale, tel qu'un évidement interne. Un tel évidement interne est susceptible de correspondre à un évidement axial que comporte un manchon formant un pied de pale amovible de jonction de la pale au moyeu.

L'utilisation d'une telle platine permet aussi de placer aisément avec précision le barreau sur le pied de pale, suivant une extension du barreau correspondante à l'axe de pivotement de la pale sur elle-même et/ou le cas échéant suivant la direction de mise en butée axiale du pied de pale contre le moyeu.

Selon une autre forme de réalisation, les moyens d'ancrage sont du type à montage pivotant du barreau sur le moyeu autour d'un doigt de pivot. Le doigt de pivot s'étend suivant l'orientation de prise d'appui du barreau contre le pied de pale correspondante à l'orientation de basculement à surveiller à partir d'un fléchissement du barreau. Un tel montage pivotant du barreau sur le moyeu interdit une mobilité du barreau sur le moyeu suivant l'orientation de basculement à surveiller, et autorise une mobilité du barreau sur le moyeu suivant une autre orientation de basculement qui n'est pas à surveiller.

Un tel montage pivotant du barreau sur le moyeu permet au barreau d'accompagner le mouvement du pied de pale suivant ladite orientation de basculement qui n'est pas à surveiller. L'amplitude d'un tel accompagnement est potentiellement conséquente, et le montage pivotant du barreau évite d'avoir à accroître en conséquence l'encombrement de l'ensemble de mesure suivant ladite autre direction de basculement qui n'est pas à surveiller. L'extension du barreau entre ses extrémités peut être accrue pour augmenter la sensibilité de détection d'une déformation du barreau en flexion par la jauge de contrainte suivant l'orientation de basculement à surveiller, sans pour autant devoir accroître en conséquence l'encombrement du pied de pale dans la direction correspondante à l'orientation de basculement qui n'est pas à surveiller.

Par exemple, la pale est potentiellement mobile en battement suivant une amplitude conséquente, tel que de l'ordre de plus ou moins 25°. Un montage du barreau en pivotement en battement sur le moyeu interdit une mobilité du barreau en traînée, sinon un fléchissement du barreau en traînée, et autorise une mobilité en battement du barreau sur le moyeu pour accompagner le mouvement du pied de pale en battement.

Les surfaces de guidage des patins le long desquelles glisse le barreau sont de préférence dotées d'un revêtement dur présentant un état de surface de plus faible rugosité raisonnablement possible. De telles dispositions favorisent le glissement de la sphère, en limitant les effets de frottement de la sphère circulant contre les patins. Un tel revêtement est notamment à base de téflon, de métal ou matériau analogue de protection à l'usure et à faible coefficient de frottement.

Les modalités de réalisation des patins et de leur fixation par scellement sur le pied de pale permettent de simplifier l'organisation de la structure de montage. La fabrication des patins à partir d'un matériau élastomère et leur implantation sur le pied de pale par scellement sont réalisées à moindre coûts, évitent une complexification de la structure de montage, et préservent le pied de pale d'un alourdissement susceptible de générer un balourd.

Le nombre d'ensembles de mesure implantés sur des pieds de pale respectifs est déterminé selon le nombre d'informations de capture souhaité pour une même orientation de basculement des pales du rotor à surveiller.

Par exemple, des ensembles de mesure en pluralité sont individuellement installés sur des pieds de pale respectifs. Au moins un premier ensemble de mesure est susceptible d'être affecté à la capture d'informations relatives à la mise en mobilité d'une pale en battement. Au moins un deuxième ensemble de mesure est susceptible d'être affecté à la capture d'informations relatives à la mise en mobilité d'une autre pale en traînée.

Pour un tour de rotor donné, une analyse optimisée peut être obtenue à partir de la mise en combinaison entre les informations respectivement fournies par les divers ensembles de mesure. Une telle satisfaction d'analyse est notamment procurée par l'utilisation de jauges de contraintes formées de transducteur SAW, dont l'implantation sur le rotor par l'intermédiaire d'une dite structure de montage permet d'exploiter au mieux leurs performances.

Selon une forme particulière de réalisation, au moins un troisième ensemble de mesure est installé sur un pied de pale qui lui est affecté, en étant dédié à la capture d'informations en mobilité de la pale correspondante portée par ce pied de pale, à la fois en battement et en traînée.

Selon encore cette forme particulière de réalisation, les portées sphériques d'appui glissant du barreau sur le pied de pale sont radialement réparties autour d'une circonférence qu'elles définissent entre elles, en procurant au moins deux appuis glissant diamétralement opposés de l'extrémité distale du barreau sur le pied de pale pour chacune des orientations de basculement à surveiller. Dans ce cas, le glissement des appuis pris par le barreau contre le pied de pale sont à considérer au regard de la direction d'extension du barreau et/ou d'extension de l'axe de pivotement de la pale.

Le barreau est susceptible d'être de section transversale régulière, telle que conformée en polygone régulier ou en disque. Une telle section transversale régulière définit une faible épaisseur du barreau suivant une quelconque dimension d'extension de sa section transversale, pour autoriser sa déformation en flexion suivant l'une et l'autre des orientations de basculement à surveiller respectivement en battement et en traînée.

Le barreau est encore susceptible d'être de section irrégulière, tant transversalement que longitudinalement. La conformation du barreau au regard de sa section transversale et/ou de sa section longitudinale est susceptible d'être mise à profit pour conférer au barreau des caractéristiques localisées de déformabilité en flexion. De telles caractéristiques localisées de déformabilité du barreau en flexion sont avantageusement exploitées selon l'organisation et/ou la position sur le barreau de la ou des jauges de contrainte, pour parfaire la précision des informations de mesure fournies par la ou les jauges de contrainte.

Il est à considérer que l'appareil est susceptible d'être réduit à un ensemble de mesure unique tout en procurant des informations de mesure susceptibles d'être analysées de manière optimisées, par un système HUMS notamment. Un tel ensemble de mesure unique est implanté sur un seul pied de pale du rotor en étant affecté à la surveillance du comportement d'une seule pale du rotor, à la fois en battement et en traînée. A partir des informations fournies par un tel ensemble de mesure unique, une transposition de ces informations est susceptible d'être pertinente pour la surveillance du comportement de l'ensemble des pales du rotor.

Il est encore à considérer que l'appareil est aussi susceptible de comprendre plusieurs ensembles de mesure respectivement affectés à différents, voire à la totalité des pieds de pale du rotor, pour surveiller le comportement des pales du rotor suivant une ou plusieurs orientations de basculement pour chacun de ces pieds de pale.

La simplicité et la légèreté de la structure de montage autorisent l'installation sur un seul pied de pale, voire sur deux pieds de pale voisins, d'un nombre limité d'ensembles de mesure différent du nombre de pied de pale du rotor, sans pour autant induire un risque de balourd significatif du rotor.

Le nombre d'ensembles de mesure à implanter respectivement sur divers pieds de pale du rotor, est déterminé selon la précision et le nombre souhaités d'informations capturées à exploiter pour analyser le comportement de pales respectives suivant une même orientation de basculement à surveiller. Le dit nombre est choisi selon le nombre de points de mesure souhaités par tour de rotation du rotor.

Il est constaté que l'exploitation d'un capteur SAW unique procure une information précise de mise sous contrainte en flexion du barreau sur lequel est implanté ce capteur SAW unique. Une telle précision est obtenue par la capacité du capteur SAW unique porté par la structure de montage, à fournir des informations de mesure non seulement précises individuellement en elles-mêmes, mais aussi des informations de mesure fournies en nombre optimisé pour un même tour de rotor, tel que de l'ordre d'au moins 20 points de mesure en flexion du barreau par tour de rotor.

L'exploitation d'ensembles de mesure placés sur des pieds de pale montés diamétralement opposés sur le rotor permet d'obtenir des informations relatives à une même orientation de basculement de pales situées à deux azimuts opposés, respectivement en situation de pale « avançante » et de pale « reculante ».

Le ou les ensembles de mesure sont aptes à être individuellement logés dans une alvéole que comporte le pied de pale correspondant. Une telle alvéole constitue avantageusement un organe de protection du ou des ensembles de mesure vis à vis de l'environnement extérieur.

Une telle alvéole est potentiellement une alvéole spécifiquement dédiée à la réception de l'ensemble de mesure, ou est avantageusement formée par un évidement que comporte structurellement le pied de pale, tel qu'un pied de pale agencé en manchon.

L'agencement simple et peu encombrant de la structure de montage autorise son logement à l'intérieur d'une telle alvéole de protection et sur un pied de pale de quelconque agencement, y compris en cas de jonction amovible du pied de pale sur le moyeu par l'intermédiaire d'au moins un organe de butée axiale.

Par exemple, le pied pale est susceptible d'être agencé en manchon monté amovible sur le moyeu par l'intermédiaire d'un organe de butée axiale. Un tel organe de butée axiale est par exemple formé à partir d'au moins un organe de roulement, voire encore et préférentiellement par une butée sphérique. L'ensemble de mesure affecté à un tel pied de pale est avantageusement logé à l'intérieur du manchon, le barreau étant aligné sur l'axe de butée.

Le dit organe de butée axiale étant agencé en butée sphérique, les moyens d'ancrage sont avantageusement formés d'une platine conformée en équerre ou analogue. Ladite équerre est en prise conjointe sur l'extrémité proximale du barreau et sur une broche de fixation de la butée sphérique au moyeu.

Des exemples de réalisation de la présente invention vont être décrits en relation avec les figures des planches annexées, dans lesquelles :
- les fig.1 et fig.2 sont des représentations schématiques partielles d'un rotor de giravion équipé d'un premier ensemble de mesure d'un appareil de capture d'informations de la présente invention, respectivement en coupe latérale et en coupe transversale.
- les fig.3 et fig.4 sont des représentations schématiques partielles d'un rotor de giravion équipé d'un deuxième ensemble de mesure d'un appareil de capture d'informations de la présente invention, respectivement en coupe latérale et en coupe transversale.
- la fig.5 est une représentation schématique partielle en coupe transversale d'un rotor de giravion équipé d'un troisième ensemble de mesure d'un appareil de capture d'informations de la présente invention.
- les fig.6 et fig.7 sont des représentations schématiques partielles d'un rotor de giravion équipé d'un quatrième ensemble de mesure d'un appareil de capture d'informations de la présente invention, respectivement en coupe latérale et en coupe transversale.

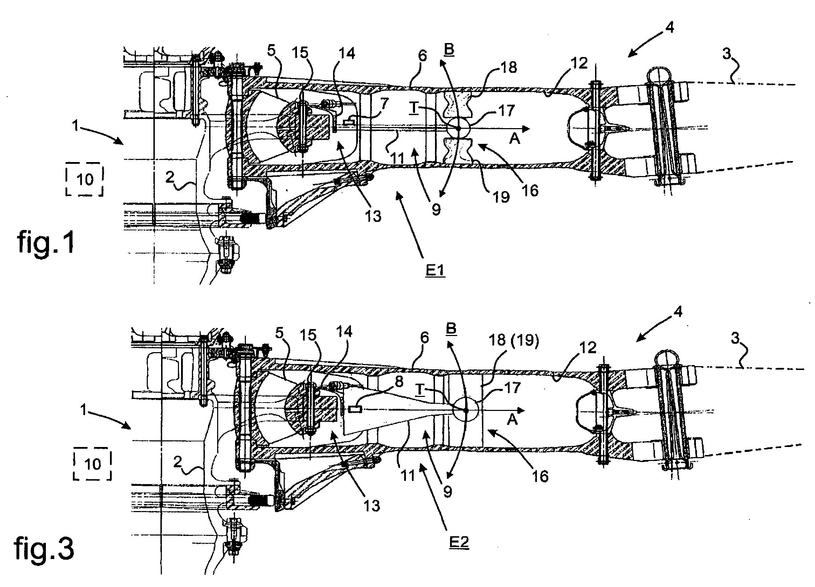

Sur les fig.1 à fig.7, un rotor 1 de giravion comprend un moyeu 2 sur lequel sont montées pivotantes des pales 3 par l'intermédiaire de pieds de pale 4 respectifs. Pour chacune des pales 3, le pied de pale 4 constitue un organe de jonction de la pale 3 au moyeu 2, en étant interposé entre eux suivant sa direction générale d'extension.

Selon l'agencement du rotor 1 illustré pour exemple sur les figures, le pied de pale 4 est monté amovible sur le moyeu 2 par l'intermédiaire d'un organe de butée axiale 5, particulièrement visible sur les fig.1, fig.3, fig.5 et fig.6. Un tel organe de butée axiale 5 est notamment agencé en butée sphérique. Le pied de pale 4 est conformé en manchon 6, et est fixé à son extrémité proximale au moyeu 2 par brochage, en deux points axialement distants suivant la direction générale d'extension du pied de pale 4.

Les pales 3 sont montées pivotantes sur le moyeu 2 pour permettre au pilote de faire varier leur pas, cycliquement ou collectivement. Une mise en rotation du rotor 1 induit une mobilité des pales 3 en inclinaison suivant deux orientations de basculement, respectivement en battement B et en traînée T. Il est apparu opportun de surveiller le comportement des pales 3 en battement B et en traînée T, au moyen d'un système de surveillance mettant en oeuvre un appareil de capture d'informations installé sur le rotor 1. Un tel appareil de capture d'informations est adapté pour être associé à un système HUMS, en procurant une analyse fiable, précise et pertinente du comportement des pales 3 en battement B et en traînée T.

L'appareil comprend au moins un ensemble de mesure E1, E2, E3, E4 installé sur un pied de pale 4 qui lui est affecté. L'ensemble de mesure comprend une ou plusieurs jauges de contrainte 7, 8 et une structure de montage 9 de la ou des jauges de contraintes 7,8 sur le rotor 1. La ou les jauges de contraintes 7,8 sont individuellement constituées d'un transducteur SAW apte à coopérer avec une unité d'interrogation 10 distante placée sur un organe fixe du giravion.

La structure de montage 9 comprend un barreau 11 sur lequel sont implantées la ou les jauges de contraintes 7,8, et des moyens de mise en prise du barreau 11 à ses extrémités respectives sur le moyeu 2 et sur le pied de pale 4. Le barreau 11 s'étend suivant la direction générale d'extension du pied de pale 4, sur lequel pied de pale 4 le barreau 11 est installé.

Plus particulièrement sur les fig.1, fig.3, fig.5 et fig.6, le barreau 11 est logé à l'intérieur d'une alvéole 12 que comprend le pied de pale 4, pour protéger la ou les jauges de contraintes 7,8 de l'environnement extérieur. Au regard de l'agencement particulier du rotor 1 illustré, l'évidement intérieur du manchon 6 est avantageusement mis à profit pour former l'alvéole 12 de réception d'un dit ensemble de mesure E1, E2, E3, E4 que comprend l'appareil.

Le barreau 11 est équipé à son extrémité proximale de moyens d'ancrage 13 au moyeu 2. De tels moyens d'ancrage 13 sont structurés en platine 14 de fixation conformée en équerre. La platine 14 est fixée conjointement sur le moyeu 2 et à l'extrémité proximale du barreau 11. La conformation en équerre de la platine 14 de fixation procure un renvoi d'angle entre la direction générale d'extension du barreau 11 et un organe solidaire du moyeu 2 exploité pour l'ancrage du barreau 11.

Au regard de l'agencement particulier du rotor illustré, une telle platine 14 conformée en équerre est susceptible d'être mise en prise sur le moyeu 2 par l'intermédiaire d'une broche 15 de fixation du manchon 6 au moyeu 2. Le barreau 11 est aligné suivant sa direction générale d'extension sur le centre de rotation de l'organe de butée axiale 5, en s'étendant le long du pied de pale 4.

Le barreau 11 est équipé à son extrémité distale de moyens de prise d'appui glissant 16 contre le pied de pale 4 suivant l'une quelconque au moins des orientations de basculement de la pale en battement B et/ou en traînée T. De tels moyens associent une sphère 17 ménagée en bout distal du barreau 11, coopérant avec des patins 18, 19 de guidage de la sphère 17. Les patins 18, 19 sont avantageusement issus d'un matériau élastomère et sont montés par scellement sur le pied de pale 4.

Pour chacune des orientations de basculement B, T de la pale 3 à surveiller, le barreau 11 est en prise d'appui glissant suivant les deux sens d'une même orientation de basculement B, T. Sur les exemples de réalisation illustrés, les patins 18, 19 sont au nombre de deux pour chacune des orientations de basculement B, T de la pale 3, chaque patin 18,19 étant affecté à une prise d'appui glissant du barreau 11 suivant un sens respectif d'une dite orientation de basculement B, T.

La prise d'appui glissant du barreau 11 sur le pied de pale 4, procure au barreau 11 une liberté de mouvement relatif par rapport au pied de pale 4, au moins suivant sa direction générale d'extension A, pour éviter d'induire un montage hyperstatique du barreau 11 sur le pied de pale 4. Le barreau 11 est aussi susceptible d'être libre en mouvement par rapport au pied de pale 4 suivant l'orientation de basculement de la pale 3 en battement B ou en traînée T différente de celle à surveiller par les jauges de contraintes 7, 8 portés par le barreau 11 correspondant, tel qu'illustré sur les fig.1 à fig.4. Le barreau 11 est en outre libre en mobilité au regard du mouvement de pivotement des pales 3 procurant la variation de leur pas, pour éviter d'affecter la pertinence des informations recherchées au moyens des jauges de contraintes 7, 8. De telles informations recherchées correspondent à une détection avec précision des déformations du barreau 11, suivant les orientations de basculement de la pale 3 respectivement en battement B et/ou en traînée T.

Le barreau 11 est flexible suivant une orientation de basculement de la pale à surveiller. Le caractère flexible du barreau 11 correspond à son aptitude à fléchir suivant l'une au moins des orientations de basculement de la pale en battement B et/ou en traînée T, et le cas échéant à son aptitude d'être résistant à sa déformation suivant une autre de ces orientations de basculement B, T.

La flexibilité du barreau 11 suivant l'une et/ou l'autre des orientations de basculement en battement B et/ou en traînée T, lui est notamment conférée à partir de la conformation de sa section transversale. Au regard de sa section longitudinale, le barreau 11 est susceptible d'être évasé vers son extrémité proximale pour conforter son ancrage au moyeu 2, et d'être effilé vers son extrémité distale pour faciliter la formation de la sphère 17.

Par exemple sur les fig.1 à fig.4, le barreau 11 est mince au regard de l'une des orientations de basculement en battement B et/ou en traînée T à surveiller, et est large au regard de l'autre orientation de basculement B, T. Le barreau 11 est flexible suivant l'orientation de basculement à surveiller et est robuste suivant l'autre orientation de basculement. La fiabilité des informations transmises par les jauges de contraintes 7,8 est optimisée, en interdisant une déformation du barreau 11 suivant une orientation de basculement dont la surveillance n'est pas affectée aux jauges de contraintes 7,8 dont le barreau 11 est porteur.

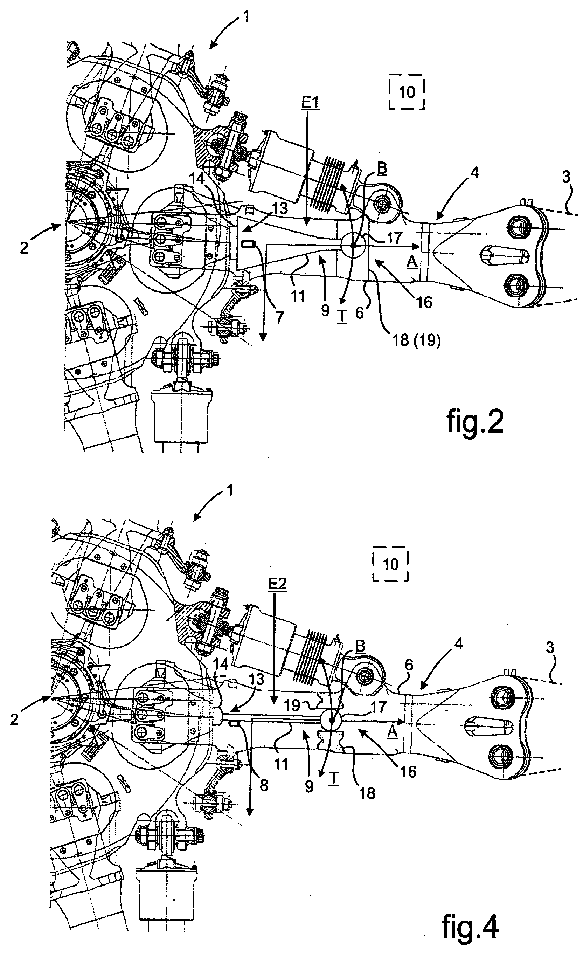

Plus particulièrement sur les fig.1 et fig.2, un premier ensemble de mesure E1 est affecté à la surveillance du comportement d'une pale 3 en battement B. Le barreau 11 est mince suivant cette orientation en battement B et est large suivant l'autre orientation en traînée T. L'appareil est susceptible de comporter un premier ensemble de mesure E1 unique, ou plusieurs premiers ensembles de mesure E1 affectés à la surveillance en battement B d'une pale 3 respective.

Plus particulièrement encore sur les fig.3 et fig.4, un deuxième ensemble de mesure E2 est affecté à la surveillance du comportement d'une pale 3 en traînée T. Le barreau 11 est mince suivant cette orientation en traînée T et est large suivant l'autre orientation en battement B. L'appareil est susceptible de comporter un deuxième ensemble de mesure E2 unique, ou plusieurs deuxièmes ensembles de mesure E2 affectés à la surveillance en traînée T d'une pale 3 respective.

L'appareil comprend de préférence au moins un premier ensemble de mesure E1, tel que représenté sur les fig.1 et fig.2, et au moins un deuxième ensemble de mesure E2, tel que représenté sur les fig.3 et fig.4. Le premier ensemble de mesure E1 et le deuxième ensemble de mesure E2 sont implantés sur des pieds de pale 4 respectifs. Le nombre d'ensembles de mesure E1 et E2 que comprend l'appareil est déterminé selon la précision et la fréquence des informations recherchées, notamment en fonction du nombre de points de mesure souhaités sur un tour de rotor 1.

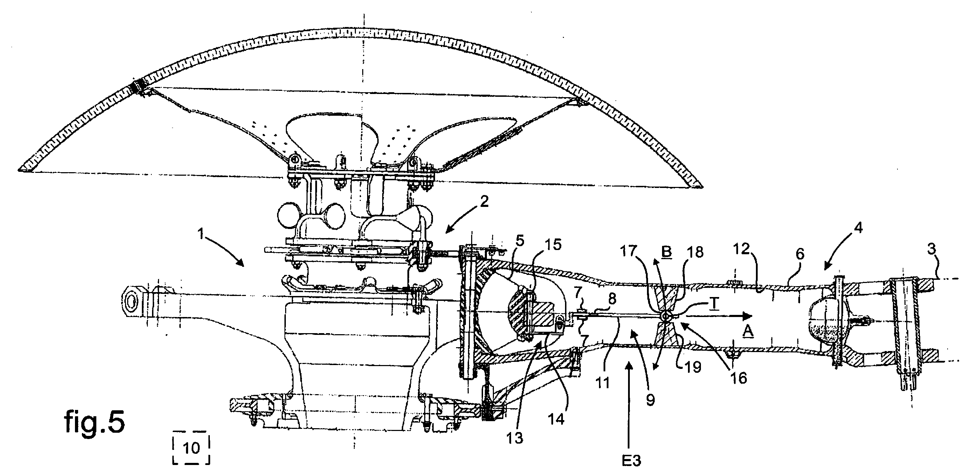

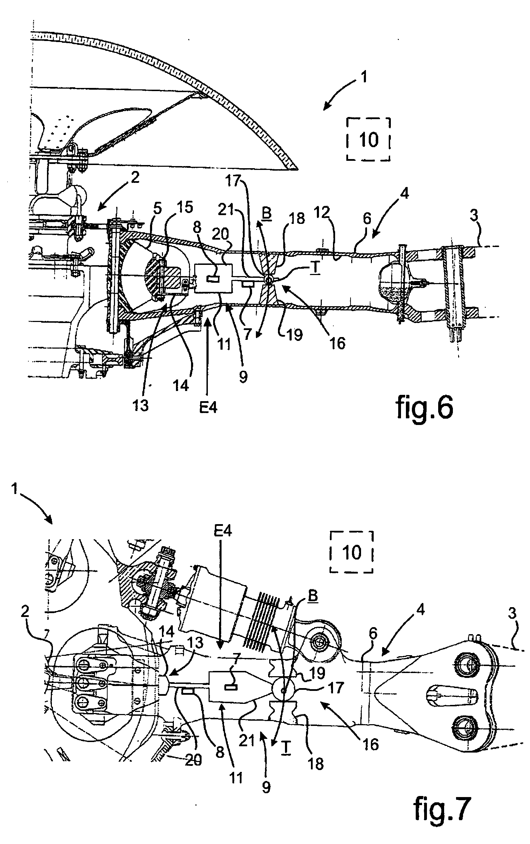

Selon une forme particulière de réalisation d'un troisième ensemble de mesure E3 et d'un quatrième ensemble de mesure E4 respectivement représentés sur la fig.5 d'une part et sur les fig.6 et fig.7 d'autre part, le barreau 11 est flexible suivant l'une et l'autre des orientations en battement B et en traînée T.

Sur la fig.5, le troisième ensemble de mesure E3 comporte un barreau 11 mince de section transversale régulière. Le barreau 11 est porteur de plusieurs jauges de contraintes 7, 8. Une première jauge de contraintes 7 est affectée à la surveillance en mobilité de la pale 3 en battement B, et une deuxième jauge de contraintes 8 est affectée à la surveillance en mobilité de la pale 3 en traînée T.

Sur les fig.6 et fig.7, un quatrième ensemble de mesure E4 comporte un barreau 11 de section irrégulière comportant deux parties distinctes 20,21 successives suivant sa direction générale d'extension. Une partie distale 21 du barreau 11 est porteuse d'une première jauge de contraintes 7 affectée à la surveillance en mobilité de la pale 3 en battement B. La partie distale 21 du barreau 11 est mince et flexible suivant l'orientation de basculement en battement B et est large et robuste suivant l'orientation de basculement en traînée T. Une partie proximale 20 du barreau 11 est porteuse d'une deuxième jauge de contraintes 8 affectée à la surveillance en mobilité de la pale 3 en traînée T. La partie proximale 20 du barreau 11 est mince et flexible suivant l'orientation de basculement en traînée T et est large et robuste suivant l'orientation de basculement en battement B.

L'appareil est susceptible de comprendre un ou plusieurs de troisièmes et/ou quatrièmes ensembles de mesure E3 et/ou E4, voire encore de comprendre en combinaison un ou plusieurs premiers ensembles de mesure E1, un ou plusieurs deuxièmes ensembles de mesure E2, et un ou plusieurs troisièmes et/ou quatrièmes ensembles de mesure E3 et/ou E4, affectés à la surveillance en mobilité de pales 3 respectives.

L'appareil de capture est aisément adaptable tant au regard des informations recherchées relatives au comportement des pales 3 en battement et/ou en traînée, qu'au regard de son implantation sur un quelconque rotor.

Au regard des dites informations recherchées et selon les besoins, l'appareil de capture est susceptible de comporter sélectivement un seul quelconque ensemble de mesure E1, E2, E3, E4 installé sur un seul pied de pale 4, ou une pluralité d'ensembles de mesure E1, E2, E3, E4 respectivement répartis entre les différentes pales 3 du rotor 1.

Le nombre et les modalités de localisation sélectives des ensembles de mesure E1, E2, E3, E4 sur les différentes pales 3 du rotor 1 peuvent être choisies selon la fréquence des informations à fournir par l'appareil de capture pour un tour de rotor 1, et/ou selon l'orientation de basculement à surveiller de mouvement de la pale 3 en battement et/ou en traînée, et/ou encore au regard de la situation « avançante » ou « reculante » d'une pale 3 pour un tour de rotor 1 donné.

Au regard de l'implantation de l'appareil sur un quelconque rotor 1, la structure de montage 9 permet l'exploitation pertinente de jauges de contraintes 7, 8 avantageusement formées de transducteurs SAW. L'appareil est implantable sur un rotor 1 présentant de quelconques modalités de jonction entre les pales 3, les pieds de pales 4 qui les supportent respectivement, et le moyeu 2. De telles modalités sont à considérer au regard notamment d'un montage individuel ou collectif des pieds de pale 4 sur le moyeu 2, ou encore d'un montage individuellement amovible des pieds de pale 4 sur le moyeu 2.

## Revendications

1. Rotor (1) de giravion comportant une pluralité de pales (3) montées mobiles sur un moyeu (2) par l'intermédiaire de pieds de pale (4) qui leur sont respectivement affectés, les pales (3) étant mobiles en pivotement sur elles-mêmes et suivant des orientations de basculement respectivement en battement (B) et en traînée (T), le dit rotor (1) étant équipé d'un appareil de capture d'informations comprenant au moins une jauge de contrainte (7,8) génératrice d'informations issues du comportement en mobilité des pales (3) suivant l'une quelconque au moins des orientations en battement (B) et/ou en traînée (T),
**caractérisé en ce que** l'appareil de capture d'informations comprend au moins un ensemble de mesure (E1, E2, E3, E4) comportant un barreau (11) flexible sur lequel est implantée au moins une jauge de contrainte (7,8) génératrice d'informations relatives au fléchissement du barreau (11) suivant l'une quelconque au moins des dites orientations en battement (B) et/ou en traînée (T), le barreau (11) étant interposé en prise à ses extrémités respectives entre le moyeu (2) et un pied de pale (4) qui lui est affecté.

2. Rotor selon la revendication 1,
**caractérisé en ce que** le barreau (11) est en prise ferme à son extrémité proximale sur le moyeu (2), et est en appui glissant contre le pied de pale (4) à son extrémité distale.

3. Rotor selon la revendication 2,
**caractérisé en ce que** le barreau (11) prend appui contre le pied de pale (4) suivant l'une au moins des dites orientations de basculement (B, T), une mobilité relative entre le barreau (11) et le pied de pale (3) étant ménagée suivant la direction générale d'extension du barreau (11) et suivant une mobilité en pivotement du pied de pale (3) sur lui-même,

4. Rotor selon l'une quelconque au moins des revendications précédentes,
**caractérisé en ce que** le barreau (11) prend appui contre le pied de pale (3) en battement (B), une mobilité relative entre le barreau (11) et le pied de pale (3) étant ménagée en traînée (T).

5. Rotor selon l'une quelconque des revendications 1 à 3,
**caractérisé en ce que** le barreau (11) prend appui contre le pied de pale (4) en traînée (T), une mobilité relative entre le barreau (11) et le pied de pale (3) étant ménagée en battement (B).

6. Rotor selon l'une quelconque des revendications 1 à 3,
**caractérisé en ce que** le barreau (11) prend appui contre le pied de pale (4) en battement (B) et en traînée (T).

7. Rotor selon l'une quelconque au moins des revendications précédentes,
**caractérisé en ce que** chacun des dits ensembles de mesure (E1, E2, E3) que comprend l'appareil de capture d'informations comporte :
-) au moins une dite jauge de contrainte (7, 8) constituée d'un transducteur SAW, et
-) une structure de montage (9) du transducteur SAW sur le rotor (1), la structure de montage (9) comprenant le dit barreau (11) flexible porteur du transducteur SAW entre ses extrémités, le dit barreau (11) étant muni à son extrémité proximale de moyens d'ancrage (13) sur le moyeu (2) et à son extrémité distale de moyens de prise d'appui glissant (16) du barreau (11) sur le pied de pale (4).

8. Rotor selon la revendication 7,
**caractérisé en ce que** les moyens de prise d'appui glissant (16) sont du type à portée sphérique entre le barreau (11) et le pied de pale (4).

9. Rotor selon l'une quelconque au moins des revendications 7 et 8,
**caractérisé en ce que** les moyens de prise d'appui glissant (16) associent, pour une dite orientation de basculement (B, T) donnée, au moins deux portées sphériques antagonistes du barreau (11) le long de surfaces de guidage respectives opposées que comporte le pied de pale (4).

10. Rotor selon l'une quelconque au moins des revendications 7 à 9,
**caractérisé en ce que** les moyens de prise d'appui glissant (16) associent une sphère (17) ménagée en bout distal du barreau (11), coopérant avec des patins (18, 19) de guidage de la sphère (17) ménagés sur le pied de pale (4).

11. Rotor selon la revendication 10,
**caractérisé en ce que** les patins (18, 19) sont issus d'un matériau élastomère et sont rapportés sur le pied de pale (4) par scellement.

12. Rotor selon l'une quelconque au moins des revendications 7 à 11,
**caractérisé en ce que** les moyens d'ancrage (13) sont du type par encastrement, l'extrémité proximale du barreau (11) étant solidaire du moyeu (1).

13. Rotor selon la revendication 12,
**caractérisé en ce que** les moyens d'ancrage (13) comprennent une platine (14) de fixation du barreau (11) sur le moyeu (1).

14. Rotor selon l'une quelconque au moins des revendications 7 à 11,
**caractérisé en ce que** les moyens d'ancrage (13) sont du type à montage pivotant du barreau (11) sur le moyeu (1) autour d'un doigt de pivot s'étendant suivant l'orientation de prise d'appui du barreau (11) contre le pied de pale (3).

15. Rotor selon l'une quelconque au moins des revendications précédentes,
**caractérisé en ce que** des ensembles de mesure (E1, E2, E3) en pluralité sont individuellement installés sur des pieds de pale (4) respectifs, au moins un premier ensemble de mesure (E1) étant affecté à la capture d'informations relatives à la mise en mobilité d'une pale (3) en battement (B) et au moins un deuxième ensemble de mesure (E2) étant affecté à la capture d'informations relatives à la mise en mobilité d'une autre pale (3) en traînée (T).

16. Rotor selon l'une quelconque au moins des revendications précédentes,
**caractérisé en ce qu'**au moins un troisième ensemble de mesure (E3, E4) est installé sur un pied de pale (4) qui lui est affecté, en étant dédié à la capture d'informations en mobilité de la pale (3) correspondante en battement (B) et en traînée (T).

17. Rotor selon l'une quelconque au moins des revendications précédentes,
**caractérisé en ce que** l'appareil est logé dans une alvéole (12) que comporte le pied de pale (4).

18. Rotor selon l'une quelconque au moins des revendications précédentes,
**caractérisé en ce que** le pied pale (4) étant agencé en manchon (6) monté amovible sur le moyeu (2) par l'intermédiaire d'au moins un organe de butée axiale (5), l'ensemble de mesure (E1, E2, E3, E4) affecté à ce pied de pale (4) est logé à l'intérieur du manchon (6), le barreau en étant aligné sur l'axe de butée (A).

19. Rotor selon la revendication 18,
**caractérisé en ce que** le dit organe de butée axiale (5) étant agencé en butée sphérique, les moyens d'ancrage (13) sont formés d'une platine (14) conformée en équerre qui est en prise conjointe sur l'extrémité proximale du barreau (11) et sur une broche (15) de fixation de la butée sphérique (5) au moyeu (2).

## Patentansprüche

1. Rotor (1) eines Drehflügelflugzeugs mit einer Mehrzahl von Rotor-blättern (3), die beweglich auf einer Nabe (2) über Rotorblattwurzeln (4), denen sie jeweils zugeordnet sind, montiert sind, wobei die Rotorblätter (3) schwenkbeweglich sind um sich selbst herum und gemäß Ausrichtungen zu Schlag(B)- und Schwenk(T)-Bewegungen, wobei der Rotor (1) mit einem Apparat zur Erfassung von Informationen ausgerüstet ist, der mindestens einen Dehnungsmessstreifen (7, 8) aufweist, der Informationen erzeugt, die aus dem Bewegungsverhalten der Rotorblätter (3) entlang mindestens einer der Schlag(B)- und/oder Schwenk(T)-Bewegungsausrichtungen hervorgehen,
**dadurch gekennzeichnet, dass** der Informationserfassungsapparat mindestens eine Messeinheit (E1, E2, E3, E4) aufweist mit einer flexiblen Stange (11), auf der mindestens ein Dehnungsmessstreifen (7, 8) platziert ist, der Informationen bezüglich einer Verbiegung der Stange (11) entlag mindestens einer der Schlag(B)- und/oder Schwenk(T)-Bewegungen erzeugt, wobei die Stange (11) zwischen der Nabe (2) und der Rotorblattwurzel (4), zu der sie gehört, angeordnet ist, und mit ihren Enden mit diesen in Eingriff steht.

2. Rotor nach Anspruch 1,
**dadurch gekennzeichnet, dass** die Stange (11) mit ihrem proximalen Ende in festem Eingriff mit der Nabe (2) steht und an ihrem distalen Ende gleitend gegen die Rotorblattwurzel (4) anliegt.

3. Rotor nach Anspruch 2,
**dadurch gekennzeichnet, dass** die Stange (11) sich an der Rotorblattwurzel (4) in mindestens einer der Schwenkausrichtungen (B, T) abstützt, wobei eine relative Beweglichkeit zwischen der Stange (11) und der Rotorblattwurzel (4) entlang der Haupterstreckungsrichtung der Stange (11) und gemäß einer Schwenkbeweglichkeit der Rotorblattwurzel (4) um sich selbst herum ausgebildet ist.

4. Rotor nach mindestens einem der vorstehenden Ansprüche,
**dadurch gekennzeichnet, dass** die Stange (11) sich gegen die Rotorblattwurzel (4) in Schlagrichtung (B) abstützt, wobei eine relative Beweglichkeit zwischen der Stange (11) und der Rotorblattwurzel (4) in Schwenkrichtung (T) ausgebildet ist.

5. Rotor nach einem der Ansprüche 1 bis 3,
**dadurch gekennzeichnet, dass** die Stange (11) sich gegen die Rotorblattwurzel (4) in Schwenkrichtung (T) abstützt, wobei eine relative Beweglichkeit zwischen der Stange (11) und der Rotorblattwurzel (4) in Schlagrichtung (B) ausgebildet ist.

6. Rotor nach einem der Ansprüche 1 bis 3,
**dadurch gekennzeichnet, dass** die Stange (11) sich gegen die Rotorblattwurzel (4) in Schlagrichtung (B) und in Schwenkrichtung (T) abstützt.

7. Rotor nach mindestens einem der vorstehenden Ansprüche,
**dadurch gekennzeichnet, dass** jede der Messanordnungen (E1, E2, E3), die der Informationserfassungsapparat hat, aufweist:
-) mindestens einen Dehnungsmessstreifen (7, 8), der aus einem akustischen Oberflächenwellenwandler besteht, und
-) einen Montageaufbau (9) des akustischen Oberflächenwellenwandlers auf dem Rotor (1), wobei der Montageaufbau (9) die flexible Stange (11) aufweist, die den akustischen Oberfächenwellenwandler zwischen ihren Enden trägt, wobei die Stange (11) an ihrem proximalen Ende mit Mitteln (13) zur Verankerung auf der Nabe (2) und an ihrem distalen Ende Mittel (16) zur gleitenden Abstützung der Stange (11) auf der Rotorblattwurzel (4) aufweist.

8. Rotor nach Anspruch 7,
**dadurch gekennzeichnet, dass** die Mittel (16) zur gleitenden Abstützung vom Typ mit kugelförmigem Sitz zwischen der Stange (11) und der Rotorblattwurzel (4) sind.

9. Rotor nach einem der Ansprüche 7 und 8,
**dadurch gekennzeichnet, dass** die Mittel (16) zur gleitenden Abstützung für eine gegebene Schwenkausrichtung (B, T) mindestens zwei entgegenwirkende kugelförmige Sitze der Stange (11) entlang der jeweiligen sich gegenüberliegenden Führungsflächen, die die Rotorblattwurzel aufweist, verbinden.

10. Rotor nach mindestens einem der Ansprüche 7 bis 9,
**dadurch gekennzeichnet, dass** die Mittel (16) zur gleitenden Abstützung eine Kugel (17), die am distalen Ende der Stange (11) angeordnet ist, die mit Führungskufen (18, 19) der Kugel (17) zusammenwirkt, die auf der Rotorblattwurzel (4) angeordnet sind, aufweisen.

11. Rotor nach Anspruch 10,
**dadurch gekennzeichnet, dass** die Kufen (18, 19) aus einem Elastomermaterial hergestellt sind und an der Rotorblattwurzel (4) angegossen sind.

12. Rotor nach mindestens einem der Ansprüche 7 bis 11,
**dadurch gekennzeichnet, dass** die Verankerungsmittel (13) eingebettet sind, wobei das proximale Ende der Stange (11) mit der Nabe (1) fest verbunden ist.

13. Rotor nach Anspruch 12,
**dadurch gekennzeichnet, dass** die Verankerungsmittel (13) eine Platte (14) zur Befestigung der Stange (11) auf der Nabe (1) aufweisen.

14. Rotor nach einem der Ansprüche 7 bis 11,
**dadurch gekennzeichnet, dass** die Verankerungsmittel (13) vom Typ einer schwenkbaren Montage der Stange (11) auf der Nabe (1) um einen Schwenkfinger sind, der sich entlang der Ausrichtung der Abstützung der Stange (11) auf der Rotorblattwurzel (4) erstreckt.

15. Rotor nach mindestens einem der vorstehenden Ansprüche,
**dadurch gekennzeichnet, dass** die Messanordnungen (E1, E2, E3) in Mehrzahl einzeln auf den jeweiligen Rotorblattwurzeln (4) installiert sind, wobei mindestens eine erste Messanordnung (E1) mit der Erfassung von Informationen bezüglich des In-Bewegung-Setzens eines Rotorblatts (3) in Schlagrichtung (B) befasst ist, und mindestens eine zweite Messanordnung (E2) mit der Erfassung von Informationen bezüglich des Beweglichmachens eines anderen Rotorblatts (3) in Schwenkrichtung (T) befasst ist.

16. Rotor nach mindestens einem der vorstehenden Ansprüche,
**dadurch gekennzeichnet, dass** mindestens eine dritte Messanordnung (E3, E4) auf einer ihr zugeordneten Rotorblattwurzel (4) installiert ist, und für die Erfassung von Informationen bezüglich der Beweglichkeit des entsprechenden Rotorblatts (3) in Schlag(B)- und Schwenk(T)-Richtung bestimmt ist.

17. Rotor nach mindestens einem der vorstehenden Ansprüche,
**dadurch gekennzeichnet, dass** der Apparat in einer Kammer (12) angeordnet ist, die die Rotorblattwurzel (4) aufweist.

18. Rotor nach mindestens einem der vorstehenden Ansprüche,
**dadurch gekennzeichnet, dass** die Rotorblattwurzel (4) als Hülse (6) ausgebildet ist, die abnehmbar auf der Nabe (2) mittels mindestens eines axialen Anschlagsorgans (5) befestigt ist, wobei die Messanordnung (E1, E2, E3, E4), die dieser Rotorblattwurzel zugeordnet ist, im Inneren der Hülse (6) angeordnet ist, wobei die Stange auf der Anschlagsachse (A) ausgerichtet ist.

19. Rotor nach Anspruch 18,
**dadurch gekennzeichnet, dass** das axiale Anschlagsorgan (5) als kugelförmiger Anschlag ausgebildet ist, wobei die Verankerungsmittel (13) aus einer zu einem Winkel gebogenen Platte (14) geformt sind, die in gleichzeitigem Eingriff mit dem proximalen Ende der Stange (11) und einem Stift (15) zur Befestigung des kugelförmigen Anschlags (5) an der Nabe (2) steht.

## Claims

1. A rotorcraft rotor (1) comprising a plurality of blades (3) mounted to be movable on a hub (2) by means of blade roots (4) which are respectively associated therewith, the blades (3) being mobile in pivoting on themselves and in tilting orientations in flapping (B) and in lag (T) respectively, said rotor (1) being equipped with an information capture apparatus comprising at least one strain gauge (7, 8) which generates information arising from the movement behaviour of the blades (3) in any one at least of the orientations in flapping (B) and/or in lag (T),
**characterised in that** the information capture apparatus comprises at least one measurement assembly (E1, E2, E3, E4) comprising a flexible bar (11) on which is implanted at least one strain gauge (7, 8) which generates information relative to the deflection of the bar (11) in any one at least of said orientations in flapping (B) and/or in lag (T), the bar (11) being interposed engaged at its respective ends between the hub (2) and a blade root (4) which is associated therewith.

2. A rotor according to Claim 1,
**characterised in that** the bar (11) is firmly engaged at its proximal end on the hub (2), and bears slidingly against the blade root (4) at its distal end.

3. A rotor according to Claim 2,
**characterised in that** the bar (11) bears against the blade root (4) in one at least of said tilting orientations (B, T), relative movement between the bar (11) and the blade root (4) being provided in the general direction of extension of the bar (11) and in movement in pivoting of the blade root (4) on itself.

4. A rotor according to any one at least of the preceding claims,
**characterised in that** the bar (11) bears against the blade root (4) in flapping (B), relative movement between the bar (11) and the blade root (4) being provided in lag (T).

5. A rotor according to any one of Claims 1 to 3,
**characterised in that** the bar (11) bears against the blade root (4) in lag (T), relative movement between the bar (11) and the blade root (4) being provided in flapping (B).

6. A rotor according to any one of Claims 1 to 3,
**characterised in that** the bar (11) bears against the blade root (4) in flapping (B) and in lag (T).

7. A rotor according to any one at least of the preceding claims,
**characterised in that** each of said measurement assemblies (E1, E2, E3) of the information capture apparatus comprises:
- ) at least one said strain gauge (7, 8) formed of an SAW transducer, and
- ) a mounting structure (9) for mounting the SAW transducer on the rotor (1), the mounting structure (9) comprising said flexible bar (11) which bears the SAW transducer between its ends, said bar (11) being provided at its proximal end with anchoring means (13) for anchoring on the hub (2) and at its distal end with means for sliding engagement (16) of the bar (11) on the blade root (4).

8. A rotor according to Claim 7,
**characterised in that** the means for sliding engagement (16) are of the type having a spherical bearing surface between the bar (11) and the blade root (4).

9. A rotor according to any one at least of Claims 7 and 8,
**characterised in that** the means for sliding engagement (16), for a given said tilting orientation (B, T), associate at least two opposing spherical bearing surfaces of the bar (11) along opposed respective guide surfaces of the blade root (4).

10. A rotor according to any one at least of Claims 7 to 9,
**characterised in that** the means for sliding engagement (16) associate a sphere (17) formed at the distal end of the bar (11), cooperating with runners (18, 19) for guiding the sphere (17) which are formed on the blade root (4).

11. A rotor according to Claim 10,
**characterised in that** the runners (18, 19) are made of an elastomeric material and are attached to the blade root (4) by sealing.

12. A rotor according to any one at least of Claims 7 to 11,
**characterised in that** the anchoring means (13) are of the type operating by embedding, the proximal end of the bar (11) being integral with the hub (1).

13. A rotor according to Claim 12,
**characterised in that** the anchoring means (13) comprise a plate (14) for fastening the bar (11) to the hub (1).

14. A rotor according to any one at least of Claims 7 to 11,
**characterised in that** the anchoring means (13) are of the type which pivotably mount the bar (11) on the hub (1) about a pivot finger extending in the bearing engagement orientation of the bar (11) against the blade root (4).

15. A rotor according to any one at least of the preceding claims,
**characterised in that** a plurality of measurement assemblies (E1, E2, E3) are individually installed on respective blade roots (4), at least a first measurement assembly (E1) being associated with the capture of information relating to a blade (3) being caused to move in flapping (B), and at least a second measurement assembly (E2) being associated with the capture of information relating to another blade (3) being caused to move in lag (T).

16. A rotor according to any one at least of the preceding claims,
**characterised in that** at least a third measurement assembly (E3, E4) is installed on a blade root (4) which is associated therewith, being dedicated to the capture of information about movement of the corresponding blade (3) in flapping (B) and in lag (T).

17. A rotor according to any one at least of the preceding claims,
**characterised in that** the apparatus is housed in a cell (12) in the blade root (4).

18. A rotor according to any one at least of the preceding claims,
**characterised in that**, the blade root (4) being arranged as a sleeve (6) mounted removably on the hub (2) by means of at least one axial abutment member (5), the measurement assembly (E1, E2, E3, E4) associated with this blade root (4) is housed within the sleeve (6), the bar being aligned on the abutment axis (A).

19. A rotor according to Claim 18,
**characterised in that**, said axial abutment member (5) being arranged as a spherical abutment, the anchoring means (13) are formed by a plate (14) shaped as an angle bracket which is engaged jointly on the proximal end of the bar (11) and on a pin (15) for fastening the spherical abutment (5) to the hub (2).
